# EUROPEAN PATENT APPLICATION

(11) **EP 2 336 263 A1**
(43) Date of publication of application: **22.06.2011**
(21) Application number: 09817523.5
(22) Date of filing: 02.10.2009
(51) Int. Cl.: C09J 201/02, C09J 9/00, C09J 11/04

(54) **HEAT-RESISTANT AND HIGHLY HEAT-CONDUCTIVE ADHESIVE AGENT**

(30) Priority: 03.10.2008 JP 2008258701
(71) Applicant: Shimane Prefectural Government, Matsue-shi Shimane 690-8501 (JP)
(72) Inventor: YOSHINO, Katsumi, Matsue-shi Shimane 690-0816 (JP); SATO, Kiminori, Matsue-shi Shimane 690-0816 (JP); UENO, Toshiyuki, Matsue-shi Shimane 690-0816 (JP); YOSHIOKA, Takashi, Matsue-shi Shimane 690-0816 (JP); FENG, Wei, Tianjin 300-192 (CN)
(74) Representative: Hirsch & Associés
(86) International application number: PCT/JP2009/005134
(87) International publication number: WO 2010/038484

(57) **Abstract**

An object of the present invention is to provide a heat-resistant and high thermal conductive adhesive having excellent mechanical strength, heat resistance, and thermal conductivity. A heat-resistant and high thermal conductive adhesive of the present invention includes: (a) a first component in which a carbon-based filler surface-modified with a first reactive functional group and an adhesive polymer matrix having a second reactive functional group are bonded by an addition condensation reaction of the first reactive functional group and the second reactive functional group; and (b) a second component containing a carbon-based filler surface-modified with a third reactive functional group, wherein the third reactive functional group is a functional group causing an addition condensation reaction with the second reactive functional group by the application of light or heat.

## Description

### Technical Field

The present invention relates to a high thermal conductive adhesive, more specifically to a high thermal conductive adhesive having heat resistance.

### Background Art

A high thermal conductive adhesive having heat resistance is a new adhesive provided with two physical properties of high heat resistance and high thermal conductivity. There is no distinct standard defining heat resistance of adhesives. In this regard, the US National Aeronautics and Space Administration (NASA) establishes standards for heat resistant adhesives as below:
(1) to keep functioning at -232°C for thousands of hours; and
(2) (a) to keep functioning at 316°C for hundreds of hours, or (b) to keep functioning at 538°C for several minutes.

As materials for heat resistant adhesives, aromatic polymers and heterocyclic polymers have been widely used. This is because these materials are molecules having a rigid structure, a molecular chain containing a conjugate system, and a high concentration, and exhibit excellent physical properties of high heat resistance. From a perspective of heat resistance, many researchers recognize that polybenzimidazoles and polyimides are the most promising materials (refer to PTL 1 and NPL 1).

However, from a perspective of thermal conductivity, thermal conductivity of polymer materials is quite low compared with that of metals. This is because the thermal conductivity of metals is caused by the movement of electrons, whereas the thermal conductivity of polymer materials is caused by the vibration of surrounding atoms or atoms of composite groups.

As guidelines for obtaining a polymer having high thermal conductivity, (1) molecular design to achieve high thermal conductivity and (2) composition of a filler having high thermal conductivity and a polymer are known (refer to NPL 2 through 4). The molecular design of (1) may include the promotion of thermal conduction by electrons by introducing a conjugated double bond structure and the promotion of thermal conduction by phonons by achieving a perfect crystal structure. However, in the field of adhesives, the approach (2), composition of a filler having high thermal conductivity and a polymer, has become common more widely.

Thermal conductivity of a filler/polymer composite system is influenced by factors, such as the type of filler, the operating temperature, the degree of crystallinity of the polymer, the orientation of polymer molecular chains, and the density (refer to NPL 5 and 6). Considering the physical properties as an adhesive, the property of heat distortion of polymers is an important element. In a case of using a polymer as an adhesive, the adhesion of the polymer severely decreases due to the internal stress produced at the time of polymerization. This phenomenon has a possibility of causing deterioration with age of the adhesive. In order to decrease the influence of heat distortion, decreasing the concentration of functional groups in the polymer, adding a reinforcing material or a ceramic filler, and/or improving the curing treatment are generally carried out (refer to NPL 7).

### Citation List

### Patent Literature

PTL 1: Japanese Patent Laid-Open No. 2007-276231

### Non Patent Literature

NPL 1: Iikay O., and Ibrahim K., Synthesis and characterization of thermally stable polymers (Polybenzimidazole) [J] ., J. Appl. Polym. Sci., 2008, 109(3): 1861-70
NPL 2: Takezama Y. , Akatsuka M. , and Fawen C. et al., High thermal conductivity epoxy resins with controlled high order structure [J] ., Pro IEEE Int. Conf . Prof. Appl. Dielectr. Mater., 2003, 3: 1146-49
NPL 3: Keith J. M., King J. A., and Miller M. G. et al., Thermal conductivity of carbon fiber/liquid crystal polymer composite [J]., J. Appl. Polym. Sci. 2006, 102(6): 5456-62
NPL 4: Lee G. W., Park M., and Kim J. et al., Enhanced thermal conductivity of polymer composites filled with hybrid fillers [J]., Compos. Apply. Sci. Manuf. (UK), 2006, 37(5): 727-34
NPL 5: Rule D. L., Smith D. R., and Sparks L. L., Thermal conductivity of polypyromellitimide film with alumina filler particles from 4.2 to 3000K [J]., Cryogenics(UK), 1996, 36(4):283-90
NPL 6: Amit D., Patrick EP., and Ravis P. et al., Size effects on the thermal conductivity of polymers laden with highly conductive filler particles [J]., Microscale Thermophys. Eng., 2001, 5(3): 177-89
NPL 7: Jia Q. M., Zheng M. Z. and Cheng J. et al., Morphologies and properties of epoxy resin/layered silicate-silica nanocomposites [J]., Polym. Int. (UK), 2006, 55(11): 1259-64

### Summary of Invention

### Technical Problem

In a case of using a ceramic filler which does not become bound to a polymer, the heat resistance and the thermal conductivity of the adhesive are prone to decrease compared with a case of using a polymer bonded ceramic filler more dispersible in a polymer. Further, a node produced at this time enlarges the internal stress of the polymer and makes it easier to cause heat distortion at a lower temperature.

### Solution to Problem

A heat-resistant and high thermal conductive adhesive of the present invention comprises: (a) a first component in which a carbon-based filler surface-modified with a first reactive functional group and an adhesive polymer matrix having a second reactive functional group are bonded by an addition condensation reaction of the first reactive functional group and the second reactive functional group; and (b) a second component containing a carbon-based filler surface-modified with a third reactive functional group, wherein the third reactive functional group is a functional group causing an addition condensation reaction with the second reactive functional group by the application of light or heat. Here, each of the carbon-based fillers of the first component and the second component may be selected from the group consisting of carbon nanotube, graphite, and carbon nanofiber. In addition, each of the first reactive functional group and the third reactive functional group may be selected from the group consisting of a carboxyl group, an imide group, an epoxy group, an isocyanate group, a phenolic hydroxyl group, an aldehyde group, and an amino group.

In addition, the heat-resistant and high thermal conductive adhesive of the present invention may further comprise a curing agent. The curing agent capable of being used can be selected from the group consisting of aliphatic polyamine, alicyclic polyamine, aromatic polyamine, acid anhydride, phenol novolac resin, dicyandiamide, imidazoles, tertiary amine, polyamide, polyimide, and polyimide.

In addition, the heat-resistant and high thermal conductive adhesive of the present invention may further comprise a reinforcing material. The reinforcing material capable of being used can be selected from the group consisting of a styrene-butadiene rubber, a styrene-butadiene-styrene rubber, a styrene-ethylene-butadiene-styrene rubber, an acrylonitrile-butadiene rubber, a chloroprene rubber, a butyl rubber, a polysulfide rubber, a silicone rubber, a polyurethane rubber, and an ethylene-propylene rubber.

In addition, the heat-resistant and high thermal conductive adhesive of the present invention may further comprise an additional filler. The additional filler capable of being used includes nano-graphite, nanoscale carbon black, and nanoscale silicon dioxide.

Further, the heat-resistant and high thermal conductive adhesive of the present invention desirably has thermal conductivity of 0.55 W/m·K or more and heat resistance of 200°C or more, after adhesion.

### Advantageous Effects of Invention

The heat-resistant and high thermal conductive adhesive of the present invention having the above configuration is based on a combination of a nanosized filler and an epoxy resin and has excellent mechanical strength, heat resistance, and thermal conductivity. The adhesive of the present invention has a tensile strength of 12 to 18 MPa. In addition, the adhesive of the present invention exhibits stable heat resistance at 200 to 380°C. Furthermore, the adhesive of the present invention has a high thermal conductivity within a range of 0.55 to 150 W/m·K, and applications to various fields are expected.

### Description of Embodiments

The heat-resistant and high thermal conductive adhesive of the present invention comprises: (a) a first component in which a carbon-based filler surface-modified with a first reactive functional group and an adhesive polymer matrix having a second reactive functional group are bonded by an addition condensation reaction of the first reactive functional group and the second reactive functional group; and (b) a second component containing a carbon-based filler surface-modified with a third reactive functional group, wherein the third reactive functional group is a functional group causing an addition condensation reaction with the second reactive functional group by the application of light or heat.

Here, each of the carbon-based fillers of the first component and the second component can be selected from the group consisting of carbon nanotube, graphite, and carbon nanofiber. As the carbon nanotube, it is desirable to use a multi walled carbon nanotube (MWNT).

Moreover, each of the first reactive functional group and the third reactive functional group, which modify a surface of the carbon-based filler, can be selected from the group consisting of a carboxyl group, an imide group, an epoxy group, an isocyanate group, a phenolic hydroxyl group, an aldehyde group, and an amino group.

The first reactive functional group, and the second reactive functional group in the adhesive polymer matrix are selected in a combination causing an addition condensation reaction by the application of light or heat. When the first reactive functional group is an epoxy group, the second reactive functional group is selected from a carboxyl group, an epoxy group, a phenolic hydroxyl group, or an amino group. When the first reactive functional group is an isocyanate group, the second reactive functional group is selected from a carboxyl group, a phenolic hydroxyl group, or an amino group. When the first reactive functional group is an aldehyde group, the second reactive functional group is selected from an aldehyde group or an acid anhydride group. When the first reactive functional group is an imide group, the second reactive functional group is selected from a carboxyl group, a phenolic hydroxyl group, or an amino group. The first reactive functional group may be directly bonded to carbon constituting the carbon-based filler or may also be bonded to carbon constituting the carbon-based filler via a linking group.

The second reactive functional group in the adhesive polymer matrix and the third reactive functional group are selected in a combination causing an addition condensation reaction by the application of light or heat. When the second reactive functional group is a carboxyl group, the third reactive functional group is selected from an epoxy group, an isocyanate group, or an imide group. When the second reactive functional group is an epoxy group, the third reactive functional group is an epoxy group. When the second reactive functional group is a phenolic hydroxyl group, the third reactive functional group is selected from an epoxy group or an imide group. When the second reactive functional group is an amino group, the third reactive functional group is selected from an epoxy group, an isocyanate group, or an imide group. When the second reactive functional group is an aldehyde group or an acid anhydride group, the third reactive functional group is an aldehyde group. The third reactive functional group may be directly bonded to carbon constituting the carbon-based filler or may also be bonded to carbon constituting the carbon-based filler via a linking group.

The surface modification of the carbon-based filler can be performed by using oxidation of a part of carbon-carbon bonds existing on a surface of the filler as a key step. For example, by causing a mixed acid (a mixture of concentrated sulfuric acid and concentrated nitric acid) or the like to act on the carbon-based filler, a part of carbon-carbon bonds on a surface of the filler is oxidized and a carboxyl group can be introduced to the filler surface. The carbon-based filler having a carboxyl group introduced therein desirably has an acid value (a number of mg of KOH required to neutralize a carboxyl group in 1 g of a sample) of 0.17 to 0.35. The introduction of a carboxyl group can be carried out by ultrasonic treating a suspension-mixed liquid of MWNT and a mixed acid for 0.5 to 3 hours, mechanically stirring the mixture for one to three hours, and heating the resultant mixture at a temperature of 60 to 90°C.

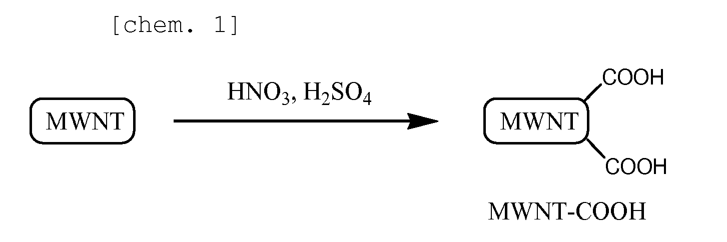

Subsequently, by chemically converting the introduced carboxyl group, a wide variety of reactive functional groups can be introduced. For example, by carrying out reduction and partial oxidation of the carboxyl group, an aldehyde group can be obtained. Alternatively, by reacting polyisocyanate (for example, 4,4'-diisocyanate diphenylmethane (MDI) or the like) with a filler having a carboxyl group on a surface, a filler surface-modified with an isocyanate group can be obtained. For example, regarding the introduction of an isocyanate group by MDI, MWNT surface-modified with an isocyanate group (MWNT-NCO) can be obtained from MWNT having a carboxyl group introduced therein (MWNT-COOH) by (1) causing it to be suspended in anhydrous N,N-dimethylformamide (DMF) by ultrasonic treatment for 0.5 to 2 hours to form a suspension having a solid content of 3 to 15 mass% and (2) adding a DMF solution of the MDI (concentration of 0.5 to 15 mass%) to the suspension to react them in a nitrogen atmosphere at 70 to 100°C for 0.5 to 3 hours. Further, by hydrolyzing an isocyanate group of the MWNT-NCO obtained, MWNT that is derived from MDI and is surface-modified with an amino group (MWNT-MDI) can be obtained.

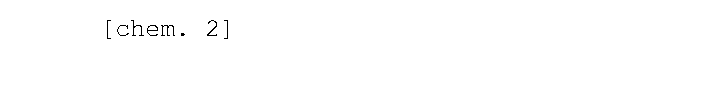

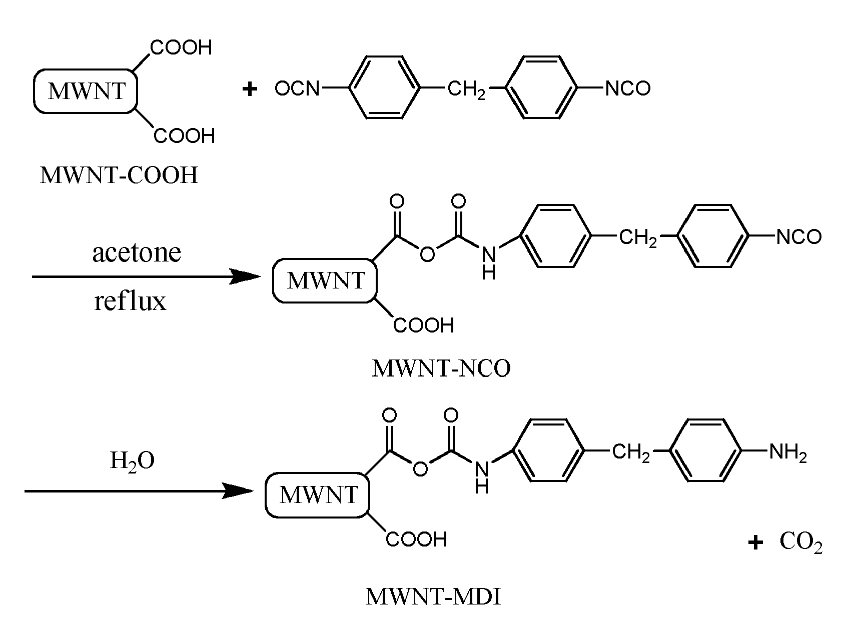

Alternatively, as an intermediate for introducing a further functional group, a filler having an acid chloride group on a surface may also be formed by converting the carboxyl group to an acid chloride group (-COCl) under action of thionyl chloride. Further, by reacting the filler having an acid-chloride group on its surface with a compound having a functional group (a hydroxyl group, an amino group, or the like) reacting with an acid chloride group for covalent bonding and a functional group, such as an imide group, an epoxy group, an isocyanate group, a phenolic hydroxyl group, an aldehyde group, or an amino group, a filler surface-modified with an imide group, an epoxy group, an isocyanate group, a phenolic hydroxyl group, an aldehyde group, or an amino group can be obtained. For example, as shown below, by reacting a filler having an acid chloride group on a surface with diamine, a filler surface-modified with an amino group can be obtained.

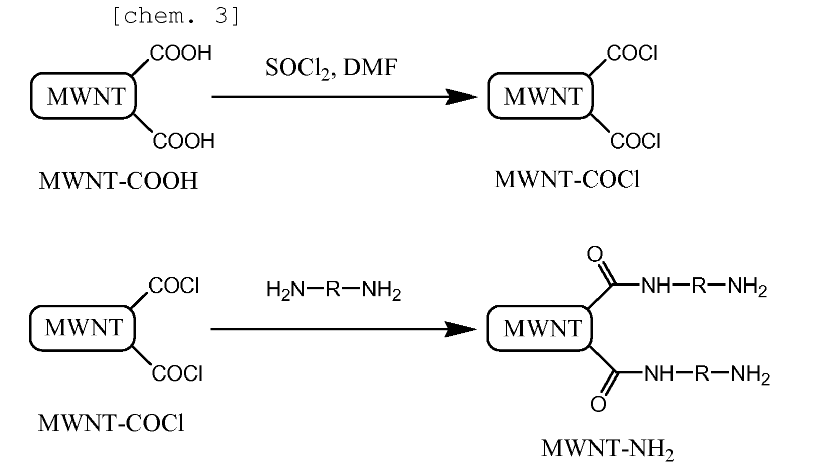

For example, regarding the conversion of a carboxyl group to an acid chloride group, MWNT having an acid chloride group introduced therein (MWNT-COCl) can be obtained by sufficiently drying MWNT-COOH, adding a mixture of DMF and SOCl₂ (DMF:SOCl₂ = 1:20 to 1:30) to it, and refluxing at a temperature of 50 to 80°C for 12 to 36 hours. In addition, MWNT surface-modified with an amino group (MWNT-NH₂) can be obtained by mixing MWNT-COCl with 1,2-ethylenediamine having a mass 5 to 10 times that of a carbon-based filler in an appropriate amount of DMF and refluxing at 100 to 140°C for 90 to 110 hours.

The first reactive functional group in the carbon-based filler of the first component is desirably present in numbers within a range of 0.225 to 0.355 milliequivalent (meq) per 1 g of a sample. Similarly, the third reactive functional group in the carbon-based filler of the second component is desirably present in numbers within a range of 0.40 to 0.55 meq per 1 g of a sample.

Further, the carbon-based filler of the first component binds to the adhesive polymer matrix having the second reactive functional group by an addition condensation reaction of the first reactive functional group and the second reactive functional group to form the first component. The adhesive polymer matrix capable of being used in the present invention includes an epoxy resin. The second reactive functional group is selected from a carboxyl group, an epoxy group, a phenolic hydroxyl group, or an amino group, an aldehyde group, or an acid anhydride group. The second reactive functional group should be selected based on addition condensation reactivity with the first and the third reactive functional groups contained in the carbon-based fillers. A desirable combination of the first and the second reactive functional groups and a desirable combination of the second and the third reactive functional groups are as described above. The second reactive functional group in the adhesive polymer matrix is desirably present in numbers within a range of 70 to 90 meq per 1 g of a sample. The first component having a carbon-based filler and an adhesive polymer matrix bonded therein desirably has the second reactive functional group within a range of 0.4 to 0.7 meq per 1 g of a sample.

For example, as shown below, by reacting a filler having a carboxyl group on its surface with an epoxy resin having two or more residual epoxy groups, the first component having a carbon-based filler and an epoxy resin bonded therein can be obtained. Here, the first component having a carbon-based filler and an epoxy resin bonded therein desirably has an epoxy group in numbers within a range of 0.4 to 0.7 meq per 1 g of a sample.

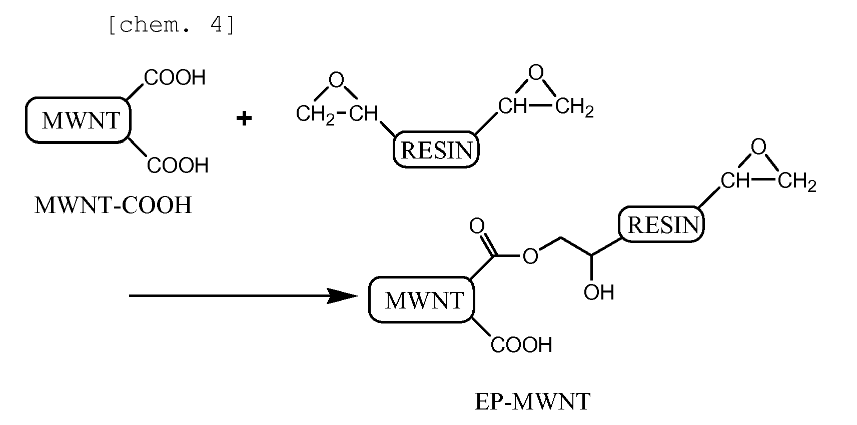

For example, an epoxy resin is mixed with 2 to 30 mass% of MWNT-COOH, based on the mass of the resin, in distilled water and ultrasonic treated for 0.5 to 2 hours to form a dispersed product. The dispersed product is heated at 80 to 100°C while stirred at 10 to 50 rpm to remove the distilled water, followed by heating at 120 to 150°C for three to eight hours, and thus the first component (EP-MWNT) can be obtained.

Although MWNT is used as an example of the carbon-based filler in the above description, similar surface modifications can also be performed in carbon nanofiber (CF) and graphite. In addition, in cases of a CF and graphite, it is also desirable to have the first and the third reactive functional groups within a range similar to the above description.

The heat-resistant and high thermal conductive adhesive of the present invention may further comprise a curing agent. The curing agent capable of being used can be selected from the group consisting of aliphatic polyamine, alicyclic polyamine, aromatic polyamine, acid anhydride, phenol novolac resin, dicyandiamide, imidazoles, tertiary amine, polyamide, polyimide, and polyimide. The imidazoles capable of being used in the present invention include 2-methylimidazole, 2-ethyl-4-methylimidazole, 2-phenylimidazole, 2-undecylimidazole, 2-heptadecylimidazole, 2-phenyl-4-methylimidazole, 2-alkyl-4-formylimidazole, 2,4-dialkyl-5-formylimidazole, and the like. Alternatively, as the curing agent, a carbon-based filler surface-modified with an amino group may also be used.

In addition, the heat-resistant and high thermal conductive adhesive of the present invention may further comprise a reinforcing material. The reinforcing material capable of being used can be selected from the group consisting of a styrene-butadiene rubber, a styrene-butadiene-styrene rubber, a styrene-ethylene-butadiene-styrene rubber, an acrylonitrile-butadiene rubber, a chloroprene rubber, a butyl rubber, a polysulfide rubber, a silicone rubber, a polyurethane rubber, and an ethylene-propylene rubber.

In addition, the heat-resistant and high thermal conductive adhesive of the present invention may further comprise an additional filler. The additional filler capable of being used includes nano-graphite, nanoscale carbon black, nanoscale silicon dioxide, nano-graphite coated with aluminum oxide, and the like. Here, "nano-graphite" in the present invention means graphite of nanoscale on at least one side (a thickness of scaled graphite). Furthermore, "nanoscale" in the present invention means to be from 1 nm to 1000 nm.

The heat-resistant and high thermal conductive adhesive of the present invention is cured for adhesion by causing an addition condensation reaction between the second reactive functional group of the first component and the third reactive functional group of the carbon-based filler of the second component by the application of light or heat. The curing and adhesion can be carried out preferably by heating at a temperature of 70 to 180°C for two to five hours.

Further, the heat-resistant and high thermal conductive adhesive of the present invention desirably has thermal conductivity of 0.55 W/m·K or more and heat resistance of 200°C or more after adhesion. In addition, the heat-resistant and high thermal conductive adhesive of the present invention desirably has tensile strength of 12 to 18 MPa after adhesion. The thermal conductivity can be measured by applying a laser flash method to a cured adhesive having a thickness of 1 mm.

The tensile strength in the present invention is measured by using a sample in which two test specimens made of medium carbon steel having an adhesion surface of 1 cm x 1 cm is prepared and 0.017 g of a heat-resistant and high thermal conductive adhesive is applied to the adhesion surfaces to adhere the two test specimens and cure at predetermined conditions (temperature and time period). By applying a tensile force vertically to the adhesion surfaces of the two test specimens, the tensile strength is obtained from a tensile force when the adhesion is broken.

In addition, the heat resistance in the present invention is measured by using a sample in which a heat-resistant and high thermal conductive adhesive is cured at predetermined conditions (temperature and time period). A mass M₀ of a sample immediately after curing is measured, and it is heated up to 800°C at 5°C/min by a thermogravimetric analysis to measure a mass M_{f} of the sample while heated. A range in which a mass change rate ((M₀ - M_{f})/M₀) of the sample while heated is less than 4%, is determined to have heat resistance at the temperature.

### Examples

### (Example 1)

A multi walled nanotube (MWNT, produced by Tsinghua-Nafine-Powder Commercialization Engineering Center, inner diameter: 2-30 nm; outer diameter: 5-60 nm) was added to a mixture of concentrated sulfuric acid and concentrated nitric acid (volume ratio of 3:1) to form a suspension mixture. The concentration of the MWNT in the suspension mixture was set to be 0.5 mg/mL. The suspension mixture thus obtained was ultrasonic treated for one hour and mechanically stirred at a rotation speed of 20 rpm for 1.5 hours. Subsequently, the mixture was heated at 80°C and was refluxed for one hour. After cooling down to room temperature, distilled water was added to the mixture for dilution and was filtered under reduced pressure through a microfilter membrane, and washed in distilled water to remove acid.

Distilled water was added to a solid substance on the microfilter membrane and the mixture was centrifugally separated for 15 minutes to separate a precipitated solid substance from an upper suspension. The solid substance was subjected to centrifuge separation in similar conditions to separate a solid substance from a suspension. This operation was repeated several times, and all suspensions were put together.

The suspensions put together were filtered under reduced pressure, and by concentrating the filtrate, MWNT-COOH was obtained. The filtered solid substance (unreacted MWNT) was recycled. The MWNT-COOH thus obtained was heated at 65°C for 15 hours in a vacuum drying oven depressurized at a pressure of 53 Pa for drying to remove all moisture attached on the surface. The MWNT-COOH thus obtained had an acid value of 0.27.

Anhydrous DMF was added to the dried MWNT-COOH to form a mixture having a solid content concentration of 5 mass%. The mixture was ultrasonic treated for one hour to obtain an MWNT-COOH suspension.

A DMF solution of MDI (5 mass%) was added to the MWNT-COOH suspension to be heated in a nitrogen atmosphere at 80°C for 1.5 hours. The reaction mixture was washed sequentially with DMF, water, and acetone, and a solid content thus obtained was dried in vacuum to obtain MWNT-MDI.

The MWNT-COOH of 5 mass% and distilled water were added and mixed to an epoxy resin (MHR 070, epoxy value = 0.01 meq/g) and was ultrasonic treated for one hour. This mixture was heated at 90°C while mechanically stirred at a rotation speed of 20 rpm to remove distilled water. Subsequently, the mixture in a good dispersion state was heated at 140°C for six hours to obtain EP-MWNT.

By mixing EP-MWNT, MWNT-MDI, 2-ethyl-4-methylimidazole as a curing agent, and an acrylonitrile-butadiene rubber (LXNBR 820) as a reinforcing material at a ratio of 50:30:15:5, an adhesive was obtained.

The adhesive thus obtained exhibited tensile strength of 13 MPa and heat resistance at 350°C. The curing conditions used were heating at 80°C for one hour and following heating at 160°C for two hours. The adhesive after curing exhibited thermal conductivity of 0.62 W/m·K.

### (Example 2)

A carbon nanofiber (CF, produced by Shen yang Gian Advanced materials Co., Ltd., outer diameter: 200-500 nm; length of 40 µm) was added to a mixture of concentrated sulfuric acid and concentrated nitric acid (volume ratio of 3: 1) to form a suspension mixture. The CF concentration in the suspension mixture was set to be 0.5 mg/mL. The suspension mixture thus obtained was ultrasonic treated for one hour and mechanically stirred at a rotation speed of 20 rpm for 1.5 hours. Subsequently, the mixture was heated at 80°C to be refluxed for one hour. After cooling down to room temperature, distilled water was added to the mixture for dilution and was filtered under reduced pressure through a microfilter membrane, and washed in distilled water to remove acid.

Distilled water was added to a solid substance on the microfilter membrane and the mixture was centrifugally separated for 15 minutes to separate a precipitated solid substance from an upper suspension. The solid substance was subjected to centrifuge separation in similar conditions to separate a solid substance from a suspension. This operation was repeated several times, and all suspensions were put together.

The suspensions put together were filtered under reduced pressure, and by concentrating the filtrate, CF-COOH was obtained. The filtered solid substance (unreacted CF) was recycled. The CF-COOH thus obtained was heated at 65°C for 15 hours in a vacuum drying oven depressurized at a pressure of 53 Pa for drying to remove all moisture attached on the surface. The CF-COOH thus obtained had an acid value of 0.46.

In addition, by using the procedure according to Example 1, EP-MWNT was prepared.

Furthermore, the MWNT-COOH prepared in the procedure of Example 1 was added to a mixture (1:25) of DMF and SOCl₂ to be heated at 70°C. The resultant mixture was refluxed for 24 hours. Subsequently, unreacted SOCl₂ at 70°C was distilled away and the mixture was cooled down to room temperature. The mixture was centrifugally separated for 15 minutes and a precipitated black solid substance was collected.

Anhydrous THF was added to the black solid substance thus obtained to form a suspension by ultrasonic treatment. The suspension was centrifugally separated for 15 minutes, and a precipitated black solid substance was collected. This step was repeated until a supernatant when being centrifugally separated became colorless, to obtain MWNT-COCl as a black solid substance.

The MWNT-COCl obtained and 1, 2-ethylenediamine were mixed at a mass ratio of 1:8, and an appropriate amount of DMF was added thereto to be heated at 120°C. The resultant mixture was refluxed for 96 hours. After cooling down the reaction mixture to room temperature once, the DMF was removed by vacuum distillation (53 Pa, 60°C) . Anhydrous ethanol was added to the residue, and the mixture was centrifugally separated for 15 minutes for washing. This washing step was repeated several times. A precipitated solid substance was collected and was heated at 60°C for 15 minutes for drying in a vacuum drying oven depressurized at a pressure of 53 Pa to obtain MWNT-NH₂.

By mixing EP-MWNT, CF-COOH, MWNT-NH₂ as a curing agent, and an acrylonitrile-butadiene rubber (LXNBR 820) as a reinforcing material at a ratio of 500 : 500 : 150 : 150, an adhesive was obtained.

The adhesive thus obtained exhibited tensile strength of 14 MPa and heat resistance at 260°C. The curing conditions used were heating at 80°C for one hour and following heating at 160°C for two hours. The adhesive after curing exhibited thermal conductivity of 2.1 W/m·K.

### (Example 3)

An adhesive was obtained by repeating the procedure of Example 2 except that the mixing ratio of EP-MWNT, CF-COOH, MWNT-NH₂, and an acrylonitrile-butadiene rubber was changed to 500:200:150:150.

The adhesive thus obtained exhibited tensile strength of 14 MPa and heat resistance at 260°C. The curing conditions used were heating at 80°C for one hour and following heating at 160°C for two hours. The adhesive after curing exhibited thermal conductivity of 1.54 W/m·K.

### (Example 4)

The CF-COOH prepared in the procedure of Example 2 was added to a mixture (1:25) of DMF and SOCl₂, and heated at 70°C. The resultant mixture was refluxed for 24 hours. Subsequently, unreacted SOCl₂ was distilled away at 70°C and the mixture was cooled down to room temperature. The mixture was centrifugally separated for 15 minutes and a precipitated black solid substance was collected.

Anhydrous THF was added to the black solid substance thus obtained to form a suspension by ultrasonic treatment. The suspension was centrifugally separated for 75 minutes, and a precipitated black solid substance was collected. This step was repeated until a supernatant when centrifugally separated became colorless, to thereby obtain CF-COCl as a black solid substance.

The CF-COCl obtained and 1,2-ethylenediamine was mixed at a mass ratio of 1:8, and an appropriate amount of DMF was added thereto, and heated at 120°C. The resultant mixture was refluxed for 96 hours. After cooling down the reaction mixture to room temperature once, the DMF was removed by vacuum distillation (53 Pa, 60°C) . Anhydrous ethanol was added to the residue, and the mixture was centrifugally separated for 15 minutes for washing. This washing step was repeated several times. A precipitated solid substance was collected and was heated at 60°C for drying for one hour in a vacuum drying oven depressurized at a pressure of 53 Pa to obtain CF-NH₂.

In addition, nano-graphite (a diameter of 5-20 µm, a thickness of 30-80 nm) was burned at 400°C for pretreatment. The pretreated nano-graphite and a buffer solution (Ca(OH)₂ standard pH buffer solution, C[1/2 Ca (OH)₂] = (0.0400 to 0.0412) mol/L)) for stabilizing the pH were added to distilled water and the mixture was then subjected to ultrasonic treatment to form a suspension. 1.5 mol/L of an aqueous AlCl₃ solution was dropped to the suspension, and heated at 80°C for 24 hours. The reaction mixture was filtered and a solid substance was washed in anhydrous ethanol. A solid substance thus obtained was dried to be heated at 500°C for three hours, and thus nano-graphite coated with aluminum oxide was obtained.

By mixing EP-MWNT prepared in the procedure according to Example 1, CF-NH₂, an acrylonitrile-butadiene rubber (LXNBR 820) as a reinforcing material, and nano-graphite coated with aluminum oxide as an additional filler at a ratio of 500:500:200:500, an adhesive was obtained.

The adhesive thus obtained exhibited tensile strength of 15 MPa and heat resistance at 270°C. The curing conditions used were heating at 80°C for one hour and following heating at 160°C for two hours. Meanwhile, in a case of heating the adhesive after curing at 470°C, it was found that decomposition of the cured substance proceeded. Furthermore, the adhesive after curing exhibited thermal conductivity of 1.5 W/m·K.

## Claims

1. A heat-resistant and high thermal conductive adhesive, comprising: (a) a first component in which a carbon-based filler surface-modified with a first reactive functional group and an adhesive polymer matrix having a second reactive functional group are bonded by an addition condensation reaction of the first reactive functional group and the second reactive functional group; and (b) a second component containing a carbon-based filler surface-modified with a third reactive functional group, wherein the third reactive functional group is a functional group causing an addition condensation reaction with the second reactive functional group by the application of light or heat.

2. The heat-resistant and high thermal conductive adhesive according to Claim 1, wherein each of the carbon-based fillers of the first component and the second component is selected from the group consisting of carbon nanotube, graphite, and carbon nanofiber.

3. The heat-resistant and high thermal conductive adhesive according to Claim 1 or 2, wherein each of the first reactive functional group and the third reactive functional group is selected from the group consisting of a carboxyl group, an imide group, an epoxy group, an isocyanate group, a phenolic hydroxyl group, an aldehyde group, and an amino group.

4. The heat-resistant and high thermal conductive adhesive according to Claim 1, further comprising a curing agent.

5. The heat-resistant and high thermal conductive adhesive according to Claim 4, wherein the curing agent is selected from the group consisting of aliphatic polyamine, alicyclic polyamine, aromatic polyamine, an acid anhydride, a phenol novolac resin, dicyandiamide, imidazoles, tertiary amine, polyamide, polyimide, and polyimide.

6. The heat-resistant and high thermal conductive adhesive according to Claim 1, further comprising a reinforcing material.

7. The heat-resistant and high thermal conductive adhesive according to Claim 6, wherein the reinforcing material is selected from the group consisting of a styrene-butadiene rubber, a styrene-butadiene-styrene rubber, a styrene-ethylene-butadiene-styrene rubber, an acrylonitrile-butadiene rubber, a chloroprene rubber, a butyl rubber, a polysulfide rubber, a silicone rubber, a polyurethane rubber, and an ethylene-propylene rubber.

8. The heat-resistant and high thermal conductive adhesive according to Claim 1, further comprising an additional filler.

9. The heat-resistant and high thermal conductive adhesive according to Claim 8, wherein the additional filler is selected from the group consisting of nano-graphite, nanoscale carbon black, and nanoscale silicon dioxide.

10. The heat-resistant and high thermal conductive adhesive according to Claim 1, wherein the adhesive has thermal conductivity of 0.55 W/m·K or more and heat resistance of 200°C or more after adhesion.
